# EUROPEAN PATENT APPLICATION

(11) **EP 0 584 875 A1**
(43) Date of publication of application: **02.03.1994**
(21) Application number: 93202461.5
(22) Date of filing: 21.08.1993
(51) Int. Cl.: B01F 1/00

(54) **Device for making brine**

(30) Priority: 28.08.1992 BE 9200761
(71) Applicant: DOTRACO, naamloze vennootschap, B-2050 Antwerpen (BE)
(72) Inventor: Van de Moortele, Guido, B-2050 Antwerpen (BE)
(74) Representative: Donné, Eddy

(57) **Abstract**

Device for making brine, consisting of a brine bin (2) with an inlet (3) for water and an outlet (4) for brine (5), characterized in that the inlet (3) for the water and the outlet (4) for the brine (5) are situated at different places in the brine bin (2).

## Description

The present invention concerns a device for making brine.

It is known that brine can be used for different purposes. A major application thereof is the rejuvenation of the active medium of water softeners.

It is known that such water softeners, after having been used for a certain time, need to be rejuvenated, whereby this is done by means of brine from what is generally called a brine bin.

The known devices for adding brine to water softeners have several disadvantages.

In the known devices, the supply of water and the discharge of brine takes place via one and the same pipe which debouches in the bottom of the brine bin, whereby water is alternately supplied to the brine bin and brine is discharged thereof. These devices are disadvantageous in that a certain waiting time is required between the supply of water and the discharge of brine, as the supply of water at the bottom of the brine bin causes a rinsing, and so one has to wait again until concentrated brine has gathered at the bottom of the brine bin. Thus, the successive removal of certain amounts of brine from the brine bin and a continuous rejuvenation of a water softener connected onto the latter is excluded.

These known devices are also disadvantageous in that arching occurs in the salt of the brine bin. Due to the fact that the water is supplied to the bottom of the brine bin, the salt at the top of the brine bin may indeed dry out, settle between the walls of the brine bin, and as the underlying salt is solved, it will not fall any further, which has for a result that for lack of salt the brine made will be no longer saturated.

Also, the present invention concerns a device for making brine which does not show said disadvantages.

To this end the invention concerns a device for making brine, consisting of a brine bin with an inlet for water and an outlet for brine, characterized in that the inlet for the water and the outlet for the brine are situated at different places in the brine bin.

Preferably, the inlet for the water is situated at a place where the saturation of the salt concentration is the lowest, whereas the outlet for the brine is situated at the place where the saturation is normally the highest. According to the most preferred embodiment, the inlet is situated above the level up to which the brine bin is filled with salt, whereas the outlet is provided in the bottom of the brine bin.

Because the water is supplied at the top and the brine is discharged at the bottom, the concentration at the bottom of the brine bin is not disturbed, so that saturated brine is always available here. Moreover, as the water is sprayed on top of the salt, arching is avoided, as all the salt is put into contact with the water, even if the salt filling reaches above the level of the solution available in the brine bin.

Because the water is supplied at the top, there is another advantage in that the valve for the water supply is situated outside the brine, such that it cannot be contaminated by any possible soil in the brine.

According to a particular embodiment, the invention also aims a device which allows for a very precise dosing of the decrease of the brine, as opposed to the known devices whereby said dosing is not very precise. That is why, in the known devices which are used for the rejuvenation of water softeners, an overdose of brine is used because precise dosing is excluded. Thus, these devices are disadvantageous in that they are oversized. Moreover, the surplus of brine, which is just washed away, is harmful for the environment.

According to a preferred embodiment, in order to allow for a precise dosing, the device according to the invention contains a dosing chamber, whose entry is connected to the exit of the brine bin. By using such a dosing chamber a very precise amount of saturated brine can be separated before being used for further purposes, for example for the rejuvenation of a water softener.

According to a preferred embodiment the invention also aims a device which is impervious to tilting, in other words whereby the salt concentration does not change when the installation is being tilted; which makes it possible to freely select the grain size of the salt, such that also powdered salt can be used; which provides for a dosing which is not influenced by the salt level; which is not expensive thanks to its simple construction; and which allows that the supply of water to the brine bin and the discharge of brine from the dosing chamber takes place via one and the same pipe so that it can be connected to existing water softeners.

To this aim the dosing chamber is equipped with several valves which are set by means of a float mechanism, in particular as described hereafter.

In order to better explain the characteristics according to the invention, the following preferred embodiments are described, by way of example only and without being limitative in any way, with reference to the accompanying drawings, in which:
figure 1 is a cross section of a device according to the invention;
figure 2 shows a view to a larger scale of the part which is indicated in figure 1 with F2;
figure 3 shows a view to a larger scale of the part which is indicated in figure 2 with F3;
figure 4 shows a cross section according to line IV-IV in figure 3;
figure 5 shows a view to a larger scale of the part which is indicated in figure 2 with F5, for another position;
figure 6 shows the part from figure 3 for another position;
figure 7 shows the part from figure 5 for another position;
figure 8 shows the part from figure 3 for yet another position;
figure 9 shows the part from figure 5 for yet another position;
figures 10, 11 and 12 show three variants of the device according to the invention.

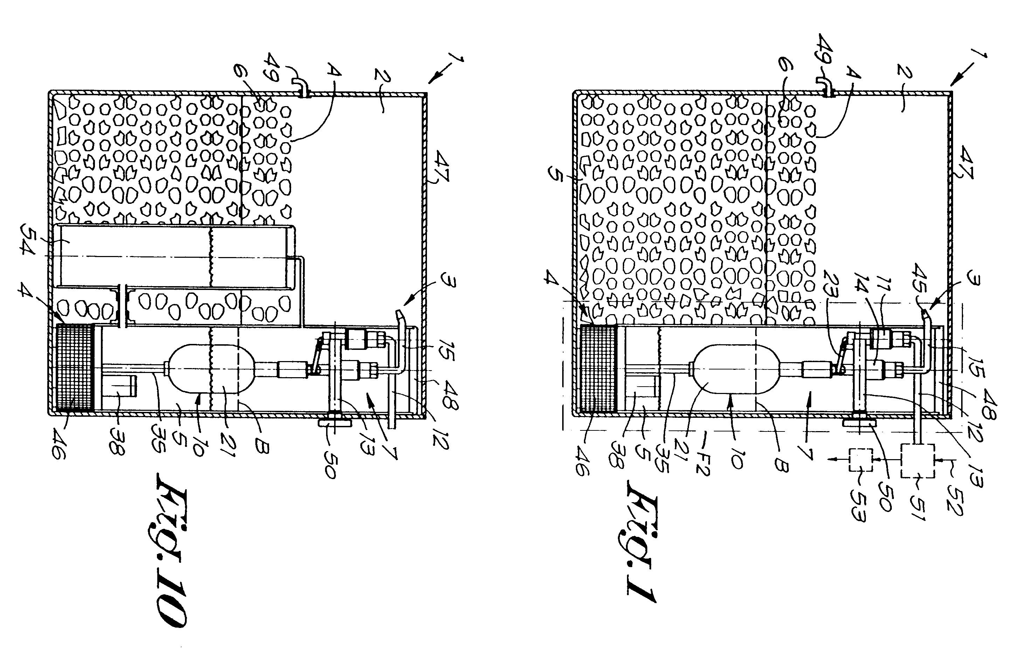

As represented in figure 1 the device 1 according to the invention mainly consists of a brine bin 2 with an inlet 3 for the water and an outlet 4 for the brine 5 made, characterized in that the inlet 3 is situated at another place than the outlet 4. As represented in figure 1 the inlet 3 is preferably situated above the level A up to which the brine bin 2 is normally filled with salt 6, whereas the outlet 4 is situated at the bottom of the brine bin 2.

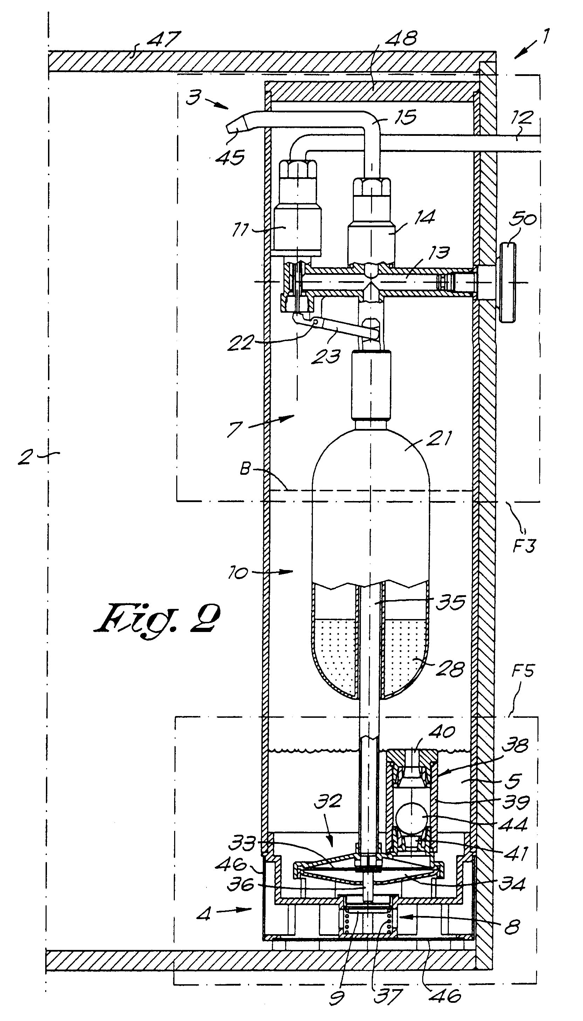

According to the preferred embodiment, in order to dose the decrease of brine, the device 1 is provided with a dosing chamber 7 whose entry 8, as represented in figure 2, is connected to the outlet 4 of the brine bin 2.

Further, the device 1 is provided with a valve 9 which is placed in the inlet 8 and which allows for the supply of brine 5 from the brine bin 2 to the dosing chamber 7, and a control mechanism 10, which in this case consists of a float mechanism, which controls said valve 9 either directly or indirectly, such that the dosing chamber 7 can only be filled with brine 5 up to a certain level B.

The supply of water preferably happens by means of a valve 11 which is also controlled by means of the above-mentioned control mechanism 10, whereby the control of this valve 11 is done such that the supply of water is only made possible until the dosing chamber 7 is filled with brine up to said level B. As soon as this level is reached, the supply is interrupted.

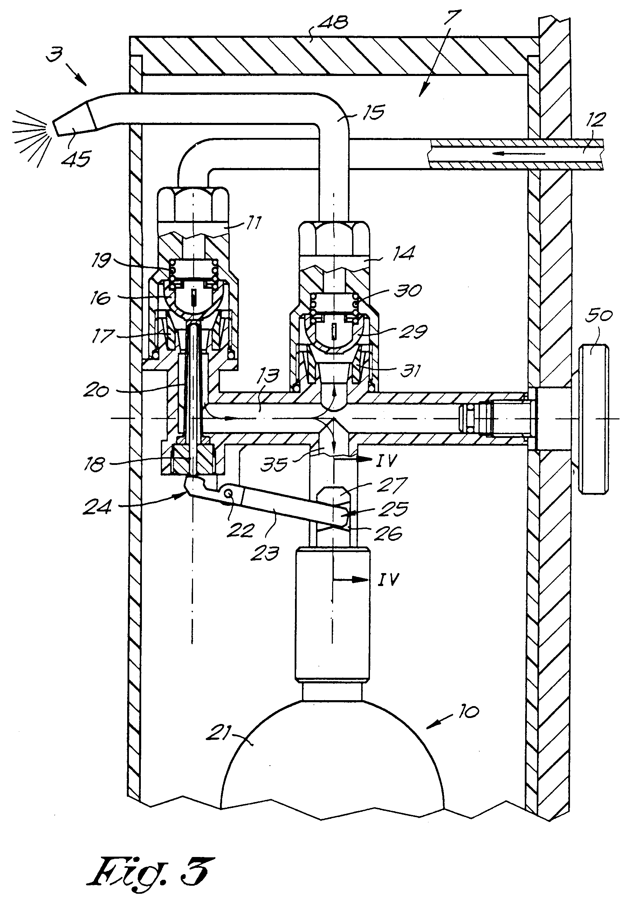

As represented in figure 2, and as shown in detail in figure 3, the valve 11 is connected to a pipe 12 through which water can be supplied and it is further connected, via a pipe 13, a non-return valve 14 and a pipe 15 to the brine bin 2. The valve 11 has a spring-loaded valve disc 16, which can cooperate with a seating 17 and which can be moved by means of a valve stem 18, a plunger or such, against the force of the spring 19, the spring force of the sealing 20 and the water pressure, more particularly opened.

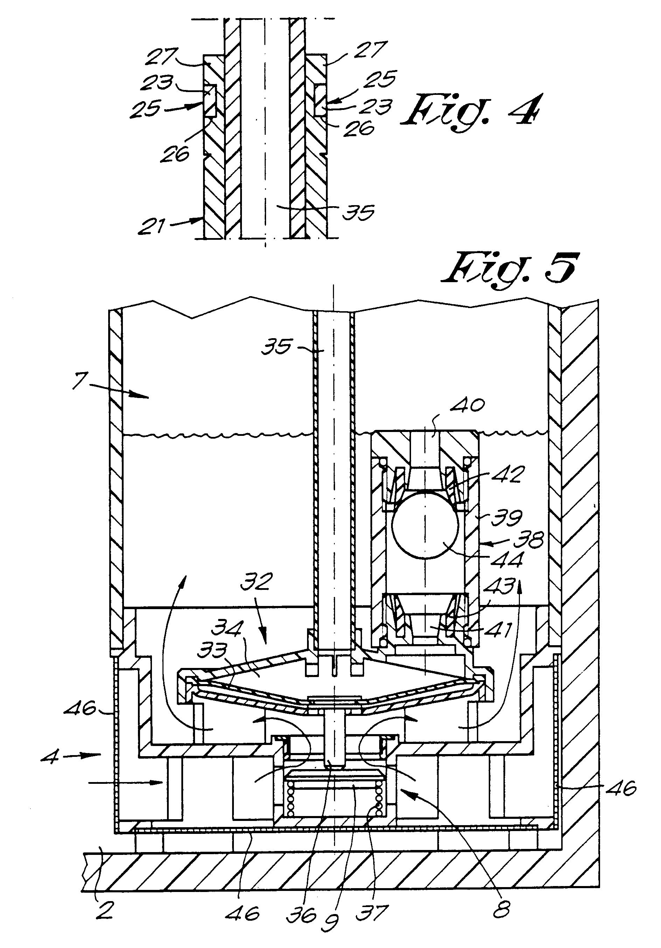

The above-mentioned float mechanism consists of a float body 21 in the dosing chamber 7, and a connection which provides for the cooperation of the float body 21 with the valve stem 18. In the example shown, this connection consists of a lever 23 which can rotate around a point of rotation 22 and which, with one end 24, works in conjunction with the valve stem 18, and which with its other end 25, as represented in figure 4, is held in recesses 26 in a support 27 fixed to the float.

As represented in figures 2 and 3 the float mechanism is designed such that the valve stem 18 is pressed in when the float body 21 is lowered, whereas when the float body 21 is floating, at least when level B is reached in the dosing chamber 7, it drops under the influence of among other things the spring force of the spring 19 and/or of the sealing 20 and the water pressure, such that the valve disc 16 is pressed onto the seating 17. It is clear that the level B can also be set then by modifying the weight of the float body 21. Preferably, said float body 21 is made such that its weight can be modified. To this end it may be hollow, such that it can be topped up with a ballast substance 28, for example sand. According to a variant, also to this aim, also the height of the support 27 in relation to the float body 21 can be altered, for example by means of a screw thread connection between these two.

The above-mentioned non-return valve 14, whose aim will be described hereafter, consists in the example shown in figure 3 of a valve disc 29 which is loaded by means of a spring 30 and which is pressed onto a seating 31 in a condition of rest. The non-return valve 14 is mounted such that it opens when water is supplied under the influence of the water pressure.

The valve 9 for the supply of the brine 5 is preferably coupled to the valve 11 for the water supply, such that when the valve 11 is closed, opened respectively, also the valve 9 is closed, opened respectively.

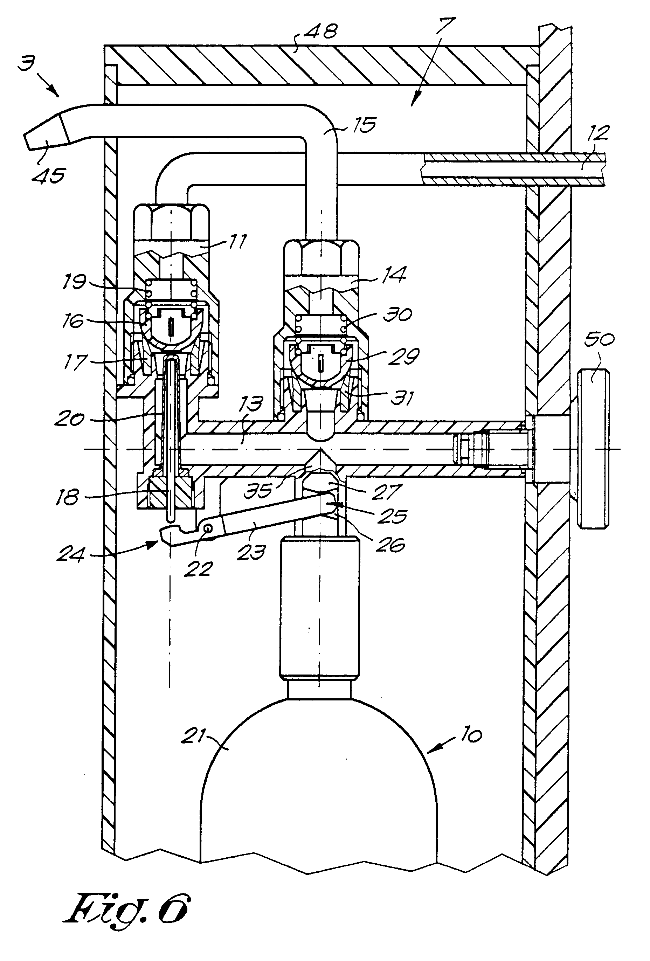

In the embodiment shown the above-mentioned valve 9 is controlled to this end by means of a pressure-sensitive element 32, such that the valve 9 is set as a function of the pressure prevailing in the pipe 13. As represented in figures 2 and 5, this pressure-sensitive element 32 mainly consists of a membrane 33 which is fixed in a chamber 34 which is freely connected to the pipe 13 via a pipe 35, and an element 36 attached to the membrane 33 which pushes open the valve 9 against the force of the spring 37 when the membrane 33 is moved, as a result of the increase of pressure in the chamber 34. It should be noted that the spring is not required if the valve 9 provides for a sufficient upward closing force thanks to its specific gravity. The chamber 34 is preferably situated at the bottom of the dosing chamber 7. The pipe 35 preferably extends vertically in the middle of the dosing chamber 7, such that it may also serve as a guide for the float body 21.

According to the most preferred embodiment the device 1 is made such that the supply of water to the brine bin 2 and the discharge of brine 5 from the dosing chamber 7 takes place via one and the same pipe, in this case the above-mentioned pipe 12. According to the embodiment of figures 1 to 5 this is possible because said pipe 35, which extends to the bottom of the dosing chamber 7, is used as a suction line to discharge the brine from the dosing chamber 7 via this pipe 35 and also via the pipe 13, the valve 11 and the pipe 12. To this aim the suction line 35 is connected at the bottom to the dosing chamber 7 by means of a non-return valve 38.

This non-return valve 38 preferably has a double action, such that it closes as soon as a liquid pressure is provided in the pipe 35, that it opens as soon as a suction force is exerted in the pipe 35 and fluid is sucked in from the dosing chamber 7, but such, however, that it also closes as soon as air is sucked in. To this end said non-return valve 38 preferably consists of a housing 39 which is provided at its entry and exit, 40 and 41 respectively, with a seating, 42 and 43 respectively, and in this housing 39 a floating valve disc 44 which can work in conjunction with both the seating 42 and 43. As represented in figure 5 the non-return valve 38 can be mounted on the chamber 34.

As represented in figure 3 the water is preferably sprayed in the brine bin 2 by means of a sprayer 45, such that the salt is optimally moistened and arching is excluded.

Between the outlet 4 and the entry 8 a filter element 46 is preferably provided, for example a gauze or filter cloth, such that also powdered salt instead of granulated salt can be used.

Both the brine bin 2 and the dosing chamber 7 may be provided with a lid 47, 48 respectively.

An overflow 49 may be provided in the brine bin 2.

The whole can be fixed by means of one screw 50, which as represented in figures 1 and 2, on the one hand holds the dosing chamber 7 in the brine bin 2 in order to prevent it from floating, and on the other hand keeps the valves and pipes in the dosing chamber 7 in place.

The working of the device is described step by step hereafter by means of figures 1 to 9.

In case the device 1 is used with water softeners the pipe 12 is connected to the control device 51 of a water softener. This control device 51 on the one hand allows that via a supply pipe 52 water under pressure can be supplied to the pipe 12, or on the other hand that brine can be sucked up via this pipe 12 after a switchover, for example by means of a venturi fitting 53 or such, whereby it is important that a certain dose of brine is measured off. This control device 51 is not part of the present invention and thus is not described any further.

As shown in figure 1 the brine bin 2 is normally filled with salt up to a certain level A.

Figures 3 and 5 represent the situation as the brine bin 2 is being filled with water. The floater is hereby situated at the bottom, which has for a result that the lever 23, due to the weight of the float body 21 exerts a pressure force on the valve stem 18 and pushes open the valve 11, such that the water runs out of the pipe 12 into the pipes 13 and 35 under pressure and is sprayed into the brine bin 2 via the non-return valve 14 and the pipe 15.

The non-return valve 38 closes under the influence of the pressure in the pipe 35. The valve disc 44 is hereby pressed onto the seating 42.

At the same time, the membrane 33 is pressed downward, such that the valve 9 is pushed open by means of the element 36. As a result, the solution from the brine bin 2 can freely run into the dosing chamber 7 via the filter element 46. As the saturated brine has the biggest specific gravity, this is always situated at the bottom of the brine bin 2, so that only saturated brine enters the dosing chamber 7. As the water is evenly sprayed over the salt 6, there is no agitation at the bottom of the brine bin, such that the concentration at the bottom of the brine bin 2 will not be disturbed.

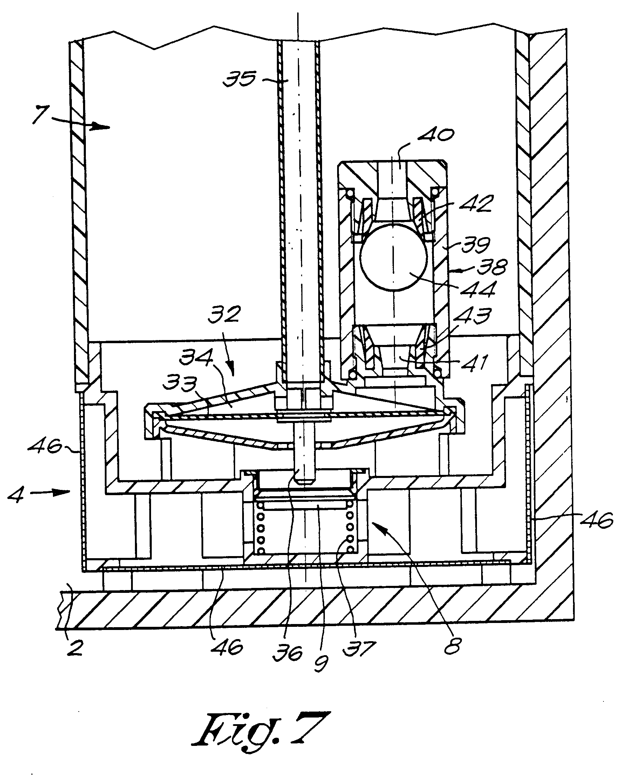

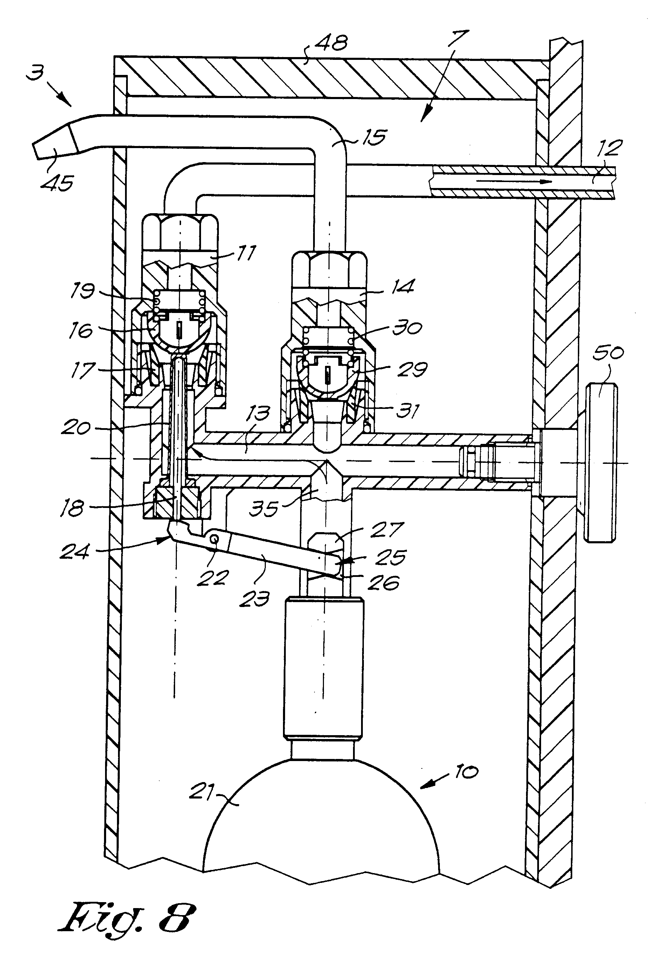

As the dosing chamber 7 is being filled with brine 5, the float body 21 starts to float, such that the lever 23 rotates. As soon as the level B is reached, the valve disc 16 falls onto its seating 17, such that the valve 11 closes and the water supply stops. Consequently, the pressure in the pipes 13 and 35 drops, as a result of which, as represented in figures 6 and 7, the valve 9 and the non-return valve 14 close. Due to its upward force, the valve disc 44 remains pressed against the seating 42.

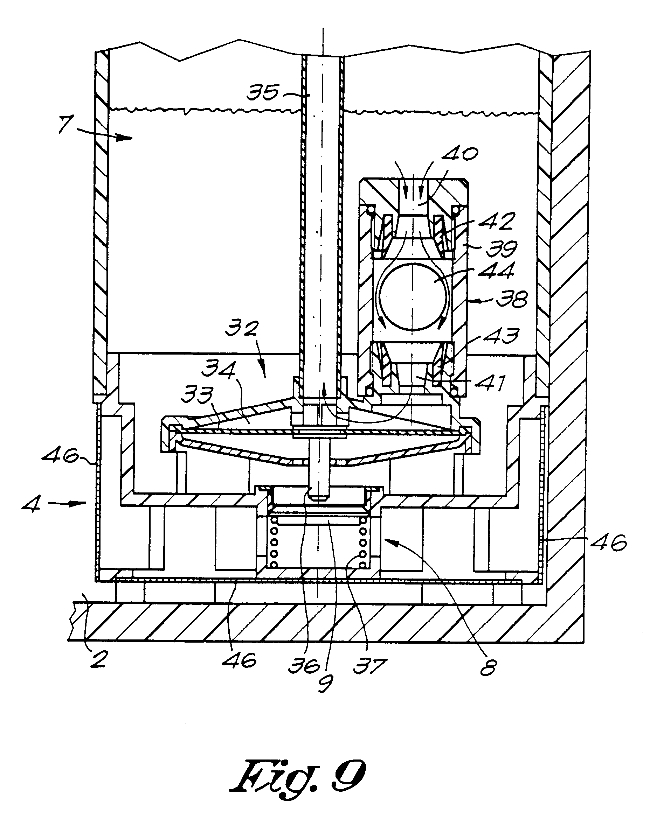

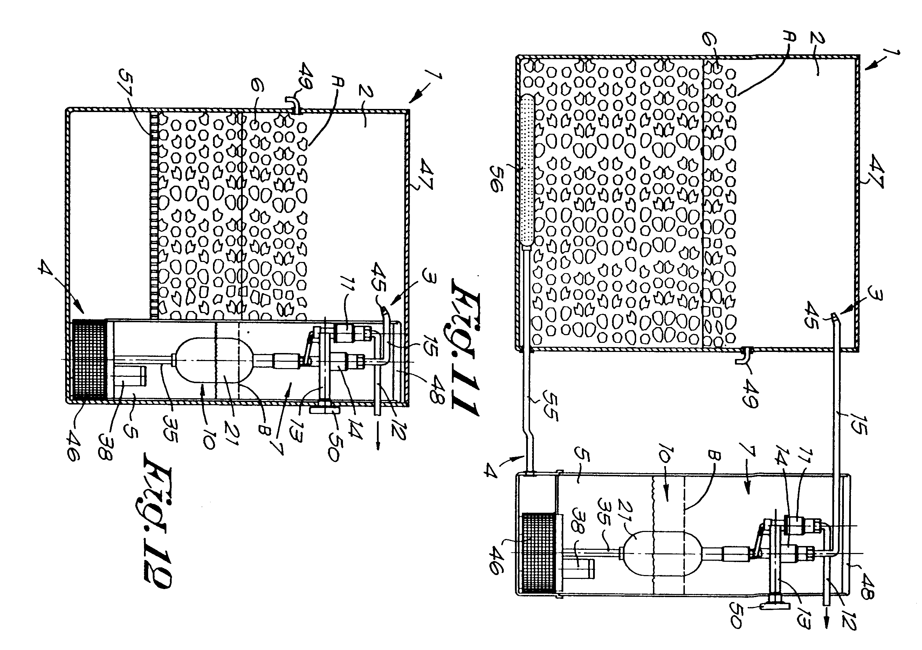

When a certain dose of brine is required, the supply of water to the pipe 12 is interrupted and a suction force is exerted on it, whereby this is controlled by means of the control device 51. Consequently, the valve 11 is sucked open, such that the valve disc 16 assumes a position as represented in figure 8. Because of the suction force, brine 5 is then sucked out from the dosing chamber 7 via the non-return valve 38, the chamber 34, the pipe 35, the pipe 13, the valve 11 and the pipe 12. Consequently, the fluid level in the dosing chamber 7 drops, such that the float body 21 goes down, until it remains in a position as represented in figure 8. It is clear that the non-return valve 14 remains closed, so that no air is sucked in. While the brine 5 is sucked out, the disc valve 44 of the non-return valve 38 assumes a position as represented in figure 9, whereby this is pulled down due to the suction force, away from its seating 42, but remains floating in the housing 39 thanks to its floating capacity without being sucked onto the seating 43.

As soon as the dosing chamber 7 is empty, more in particular when the fluid level reaches the top edge of the valve 37, the valve disc 44 is sucked onto the seating 43 if any further suction force is exerted, as represented in figure 2, such that no air can be sucked in. The control device 51 can then make sure that the suction action is stopped after a certain amount of time, and water is supplied again.

As represented in the above-described figures the dosing chamber 7 is preferably mounted in the brine bin 2.

As represented in figure 10 the dosing chamber 7 may be connected to an extra tank 54 in order to increase the dosing volume. This tank 54 may be placed in the brine bin 2, as in figure 10, or be placed outside the brine bin 2 according to a variant.

In order to provide for a large dosing volume, without considerably reducing the available room for the salt 6 in the brine bin 2, the dosing chamber 7 may be entirely erected outside the brine bin 2, for example as represented in figure 11, whereby the dosing chamber 7 can be relatively big. The supply of the brine 5 from the brine bin 2 to the dosing chamber 7 in this case takes place via a pipe 55 which, in order to avoid obstructions, is provided with a filter element 56 at its entry.

Figure 12 represents yet another variant whereby the salt 6 is piled up on a salt platform 57.

According to a simpler embodiment, an entry 8 which is permanently open can be provided at the dosing chamber, whereby the valve 9 and the pressure-sensitive element 32 can then be omitted from the device. In this case, the dosing will be less precise, but the advantage that there is no arching remains. The dosing will be somewhat less precise because the fluid level in the dosing chamber 7 does not immediately follow the dosing level in the brine bin 2, and after the water supply has been closed off, the fluid level in the dosing chamber 7 will still rise somewhat, until a balance is reached between the brine bin 2 and the dosing chamber 7.

The present invention is in no way limited to the embodiments described by way of example and shown in the accompanying drawings; on the contrary such a device for making brine can be made in various forms and dimensions while still remaining within the scope of the invention.

## Claims

1. Device for making brine, consisting of a brine bin (2) with an inlet (3) for water and an outlet (4) for brine (5), characterized in that the inlet (3) for the water and the outlet (4) for the brine (5) are situated at different places in the brine bin (2).

2. Device according to claim 1, characterized in that the inlet (3) for the water is situated at the place in the brine bin (2) where the saturation of the brine is normally the lowest, whereas the outlet (4) for the brine (5) is situated at the place where the saturation is normally the highest.

3. Device according to claim 2, characterized in that the inlet (3) for the water is situated above the level (A) up to which the brine bin (2) is normally filled with salt (6), whereas the outlet (4) for the brine is situated at the bottom of the brine bin (2).

4. Device according to any of the above claims, characterized in that the device (1) contains a dosing chamber (7) whose entry (8) is connected to the outlet (4) of the brine bin (2).

5. Device according to claim 4, characterized in that it is provided with a valve (11) to control the water supply and in that the dosing chamber (7) is provided with a control mechanism (10) which controls said valve (11) as a function of the fluid level in the dosing chamber (7), such that the valve closes as soon as the fluid level in the dosing chamber (7) has reached a certain level (B).

6. Device according to claim 4, characterized in that the dosing chamber (7) is provided with a valve (9) at its entry (8) and in that the dosing chamber (7) is provided with a control mechanism (10) which controls said valve (9) either directly or indirectly as a function of the fluid level in the dosing chamber (7), such that said valve (9) closes as soon as the fluid level has reached a certain level (B).

7. Device according to claim 6, characterized in that it is provided with a valve (11) to control the water supply, whereby this valve (11) is also controlled by means of the above-mentioned control mechanism (10), such that this valve (11) closes as soon as the fluid level in the dosing chamber (7) has reached a certain level (B).

8. Device according to claim 7, characterized in that the valve (9) for the supply of brine (5) in the dosing chamber (7) is coupled to the valve (11) to control the water supply, such that when the valve (11) for the water is closed, opened respectively, also the valve (9) for the brine (5) will be closed, opened respectively.

9. Device according to claim 8, characterized in that the valve (9) for the supply of brine is controlled by means of a pressure-sensitive element (32) which controls the valve (9) as a function of the pressure prevailing in the pipe (13) which, when water is being supplied, is situated downstream of the valve (11) which controls the water supply.

10. Device according to claim 9, characterized in that the pressure-sensitive element (32) mainly consists of a membrane (33) which is fixed in a chamber (34) which is connected to said pipe (13) via a pipe (35), and an element (36) attached to the membrane (33) which pushes open the valve (9) when the membrane (33) is moved as a result of the increase of pressure in the chamber (34).

11. Device according to any of claims 7 to 10, characterized in that it has a common pipe (12) for the supply of water to the device (1) and for the discharge thereof of brine (5) by exerting a suction force on it; in that the above-mentioned valve (11) for the supply of water is placed in the above-mentioned pipe (12); and in that this valve (11) is connected to two pipes, a pipe (15) to bring the water in the brine bin (2) and a pipe (35) to suck the brine (5) from the dosing chamber (7) respectively, whereby the pipe (15) to bring the water in the brine bin (2) is provided with a non-return valve (14) which opens as water is supplied and closes as brine (5) is sucked out, and whereby the pipe (35) to suck the brine (5) from the dosing chamber (7) is provided with a non-return valve (38) which closes when a fluid pressure is provided in the pipe (35) and which opens when fluid is sucked in.

12. Device according to claim 11, characterized in that the non-return valve (38) in the pipe (35) to suck in the brine (5) from the dosing chamber (7) has a double action, more particularly in that it closes when a fluid pressure is exerted in the above-mentioned pipe (35), and opens as fluid is sucked in, but also closes when air is sucked in.

13. Device according to claim 12, characterized in that the non-return valve (38) consists of a housing (39) with an entry (40) and an exit (41) which are each provided with a seating (42,43), and a floating valve disc (44) which works in conjunction with the above-mentioned seatings (42,43).

14. Device according to any of claims 5 to 13, characterized in that the control mechanism (10) consists of a float mechanism.

15. Device according to any of claims 5 and 7 to 13, characterized in that the control mechanism (10) consists of a float mechanism which is formed of a float body (21) and a lever (23) working in conjunction with it which can be rotated around a point of rotation (22) and which controls the valve (11) for the water supply, whereby this valve (11) is kept in its open position under the influence of the weight of the float body (21).

16. Device according to claim 14 or 15, characterized in that the weight of the float body (21) can be set.

17. Device according to any of claims 14 to 16, characterized in that the float body (21) is erected in a sliding and guiding manner along the pipe (35) through which the brine (5) from the dosing chamber (7) is discharged.

18. Device according to any of claims 4 to 17, characterized in that a filter element (46) is placed in the brine bin (2) and the dosing chamber (7).

19. Device according to any of the above claims, characterized in that the inlet (3) for the supply of water to the brine bin (2) is provided with a sprayer (45).
